# EUROPEAN PATENT APPLICATION

(11) **EP 4 388 851 A1**
(43) Date of publication of application: **26.06.2024**
(21) Application number: 22215335.5
(22) Date of filing: 21.12.2022
(51) Int. Cl.: A01D 34/30, A01D 41/14, A01D 69/06

(54) **A DRIVELINE FOR THE RECIPROCATING KNIVES OF AN AGRICULTURAL HEADER**

(71) Applicant: CNH Industrial Belgium N.V., 8210 Zedelgem (BE)
(72) Inventor: Ysebaert, Maarten, 8700 Tielt (BE)
(74) Representative: CNH Industrial IP Department

(57) **Abstract**

An agricultural header (1) comprises a header frame formed by back wall (4) and two sidewalls (3), and a set of knives configured to undergo a reciprocating transverse movement. The header further comprises a driveline for driving said reciprocating movement, the driveline including a transverse drive shaft (15) at the back of the header frame, a bevel gearbox (18), a lateral drive shaft (21) adjacent a sidewall and a transmission (31) in the vicinity of the knives and configured to directly drive the knife motion. According to the invention, a torque limiter (35) is mounted between the drive shaft and the transmission, said torque limiter comprising a housing (47), a central hub (49) and a clutch mechanism configured to rotatably engage or disengage the housing relative to the hub or vice versa. The housing (47) is configured to realize or contribute to the function of stabilizing the rotation of the lateral driveshaft (21) when the clutch mechanism is engaged.

## Description

### Field of the Invention

The present invention is related to self-propelled combine harvesters, in particular to a driveline that connects a power shaft of the harvester to a set of reciprocating knives of a combine header coupled at the front of the harvester.

### State of the art.

A combine harvester includes a main self-propelled body mounted on wheels and/or tracks. The main body comprises an engine to drive the self-propelled movement of the harvester, a feeder at the front of the harvester, a threshing system, a cleaning arrangement, a grain tank and a crop residue spreading apparatus. A removable header is attached at the front of the harvester, the header comprising movable knives at the front of a header table, a reel for guiding crops towards the knives, and transportation means such as an auger or a set of draper belts, to move the harvested crops towards the centre of the header where the crops are loaded into the feeder.

The knives of the header are part of a single or double cutterbar, that further comprises stationary counterknives, wherein the movable knives undergo a reciprocating movement or a continuous movement relative to the counterknives, thereby cutting the crops at a given height above ground level.

The movement of a set of reciprocating knives is typically driven by a driveline that is coupled to a power shaft of the harvester, and that comprises a laterally placed gearbox near the back side of the header and a transmission near the front side of the header, where a rotating part of the transmission is converted into a reciprocating motion. In traditional harvester designs, the transmission may be a belt or chain transmission, and the conversion may be realized by a wobble box.

Alternative configurations have been developed, as illustrated for example in patent publication documents EP2700293A2 and EP2700294A2 wherein the driveline comprises a bevel gearbox, a telescopic rotatable shaft coupled at one end to the output axle of the bevel gearbox, and a planetary gearbox coupled to the other end of the telescopic shaft. The telescopic shaft takes the place of the belt drive of the more traditional configuration, and the planetary gearbox takes the place of the wobble box. The fact that the shaft is telescopic enables moving the cutterbar forward and backward for varying the length of the header table.

In the configuration described in EP2700294A2, an overload clutch is included in the driveline, between the bevel gearbox and the telescopic shaft, or between the telescopic shaft and the planetary gearbox. Only the former of these two embodiments is described in detail however. This embodiment is technically complex and it is therefore desirable to provide a more straightforward alternative.

### Summary of the invention

The invention aims to solve the above-described problems and achieves this aim by a header comprising a driveline arrangement as described in the appended claims. The present invention is thus related to an agricultural header comprising a header frame formed by a back wall and two sidewalls, and a set of knives configured to undergo a reciprocating transverse movement, i.e. transverse with respect to the forward direction of travel of an agricultural harvester when the header is coupled thereto. The header comprises a driveline for driving said reciprocating movement, the driveline including a transverse drive shaft at the back of the header frame, a bevel gearbox, a lateral drive shaft adjacent a sidewall and a transmission, such as a wobble box or a planetary gearbox, in the vicinity of the knives and configured to directly drive the knife motion. The lateral drive shaft is coupled respectively to the bevel gearbox and the transmission by a first and second universal joint. According to the invention, a torque limiter is mounted between the drive shaft and the transmission, said torque limiter comprising a housing, a central hub and a clutch mechanism configured to rotatably engage or disengage the housing relative to the hub or vice versa. In a driveline according to the invention, the housing of the torque limiter is configured to realize or contribute to the function of stabilizing the rotation of the lateral driveshaft, when the clutch mechanism is engaged. According to specific embodiments, the driveline comprises a flywheel so that the torque limiter and the flywheel jointly perform the stabilizing function. The header according to the invention may be a combine header or any other agricultural header comprising reciprocating knives.

### Brief description of the figures

Figure 1 illustrates a combine header as presently known in the state of the art.
Figure 2 illustrates key elements of a driveline in accordance with an embodiment of the invention.
Figure 3 is a side view of a torque limiter integrated in a driveline in accordance with an embodiment of the invention.
Figures 4a and 4b illustrate one exemplary type of torque limiter applicable in driveline according to the invention, when the torque limiter is in the engaged state.
Figures 5a and 5b illustrate the torque limiter of Fig. 4a/4b in the disengaged state.
Figure 6 illustrates an alternative way to integrate a torque limiter in a driveline according to the invention.

### Detailed description of preferred embodiments of the invention

Preferred embodiments will now be described with reference to the drawings. The detailed description is not limiting the scope of the invention, which is defined only by the appended claims.

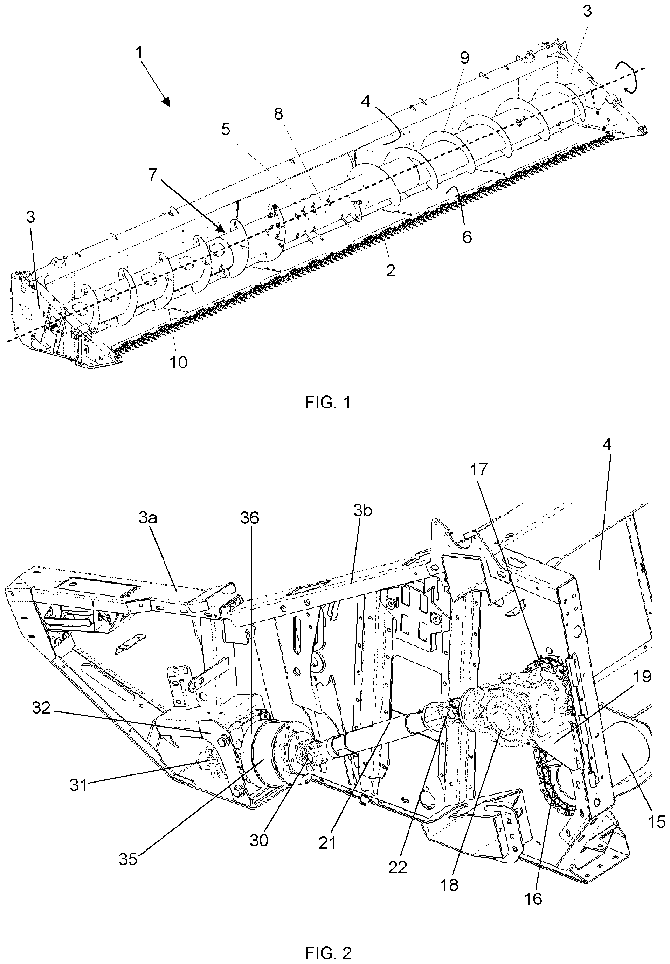

Figure 1 shows a combine header 1 as known in the art. The header 1 comprises a header frame formed of a pair of sidewalls 3 and a back wall 4. The back wall 4 includes an entry port 5 towards the feeder of the combine harvester (not shown). A header floor 6 is mounted between the sidewalls 3, with a cutterbar 2 located at the front of the header floor 6. A rotatable auger 7 comprises a cylindrical tube 8 extending essentially along the full width of the header and provided with two oppositely wound helicoidal flights 9 and 10 on either side of a central area. When the auger 7 rotates in the direction indicated by the arrow, the helicoidal flights push the crops towards the centre. A well-known alternative to the auger-based system is a set of draper belts for bringing the crops to the central area of the header.

The cutterbar 2 comprises knives which are configured to undergo a reciprocating motion in the direction of the width of the header, relative to stationary knife guards, so as to effectively cut off the crops by the motion of the knives relative to the knife guards. For large headers like the one illustrated, the cutterbar 2 comprises a stationary set of knife guards and two sets of reciprocating knives, the sets being driven by respective drive mechanisms (not shown in Figure 1) mounted at the two sides of the header. For smaller header types, a single set of knives may be applied.

An exemplary embodiment of a driveline according to the invention, for driving the reciprocating movement of the knives is now described in more detail, with reference to Figure 2, which shows the main components of one lateral driveline in some detail.

In the following, the terms 'inlet axle' and 'outlet axle' are defined within the present context as respective axles of gearboxes or other types of transmissions which are part of the driveline. The wording 'inlet' and 'outlet' are to be understood as referring to the direction of the power transfer along the driveline, starting at the back of the header where power is taken up from a power source, towards the front of the header, where power is consumed by the movement of the knives.

The term 'rotatably connected' is defined within the present context as follows : two rotatably parts are rotatably connected when they are connected together so as to be able to rotate as a single body. The parts could be connected by a releasable connection, for example a spline connection or by a permanent connection such as by welding, or by forming one integral piece. When a part is said to be rotatably connected to a universal joint, this means that the part rotates as a single body with one part of the joint, for example one fork of a universal joint comprising two articulated forks which are pivotable about a pivot pin.

The driveline comprises a transverse drive shaft 15 mounted at the back of the header 1, behind the back wall 4. This shaft 15 is referred to as transverse in the sense that it is oriented transversally with respect to the header's forward direction of travel through a field of crops when the header 1 is mounted at the front of an operational combine harvester. The transverse shaft 15 is coupled at its first end (not shown) to a power shaft of the combine. At its second end, the transverse shaft 15 comprises a sprocket 16, which is the driving sprocket of a chain drive that further comprises a second sprocket 17, located above said driving sprocket 16. Said upper sprocket 17 is rotatably connected to the inlet axle of a bevel gearbox 18 mounted on a support bracket 19 that is fixed to the header frame. The bevel gearbox 18 comprises said inlet axle (not visible) and an outlet axle, coupled to the first end of a lateral drive shaft 21 by a first universal joint 22. The drive shaft 21 is termed 'lateral' in the sense that it is located at the side of the header frame and oriented from the back area of the header 1 towards the front area of the header 1, i.e. in the general direction of the header's forward movement through a field when it is coupled to an operational harvester.

The driveline for the knife movement may comprise further universal joints or other couplings upstream of the components described so far, i.e. between a power shaft of the harvester and the bevel gearbox 18. Such upstream joints and couplings are not shown in detail and are not the subject of the present invention. In fact, this upstream part of the driveline may be in accordance with any currently known driveline design. Also, the bevel gearbox 18 itself is a component that is known per se, and any suitable type of known bevel gearbox may be applied in the driveline of the invention, comprising a set of bevel gears configured to transform the rotation about a first axis to a rotation about a second axis oriented essentially perpendicularly to the first axis. According to alternative embodiments of the invention, the bevel gearbox 18 is coupled directly to the transverse drive shaft 15 instead of being coupled thereto via the chain drive comprising the sprockets 16 and 17.

In the embodiment shown in Figure 2, the header floor, including the cutterbar mounted at the front thereof, is extendable and retractable. This movement may be actuated by multiple variable length actuators (not shown) mounted underneath the header floor. The sidewalls in this embodiment comprise a front portion 3a and a back portion 3b. The header floor (not visible in Figure 2) is coupled to the front portions 3a of the sidewalls which are movable forward and backward relative to the back portions 3b. In order to enable these movements, the lateral drive shaft 21 is a telescopic drive shaft that can extend or retract in length when the header floor is extended or retracted. Such a telescopic drive shaft is known as such and various known types of telescopic drive shafts can be implemented in a header according to embodiments of the invention that include an extendable and retractable header table. The invention is however not limited to a header comprising an extendable header floor, but applies also to a header having a fixed header floor. In that case, the lateral drive shaft 21 can be a standard (i.e. non-telescopic) drive shaft.

As stated, the first end of the lateral drive shaft 21 is coupled to the outlet axle of the bevel gearbox 18 via the first universal joint 22. The second end of the lateral drive shaft 21 is coupled to a second universal joint 30.

The driveline further comprises a planetary gearbox 31 that is mounted on a support bracket 32 fixed to the extendable portion 3a of the header's side wall. The planetary gearbox 31 comprises an outlet axle (not visible) that is coupled to the knives in order to actuate the reciprocating movement of the knives. The planetary gearbox 31 as such and the way in which it is coupled to the knives may be in accordance with known configurations, and these aspects are therefore not described here in detail. Instead of a planetary gearbox, a wobble box could be used.

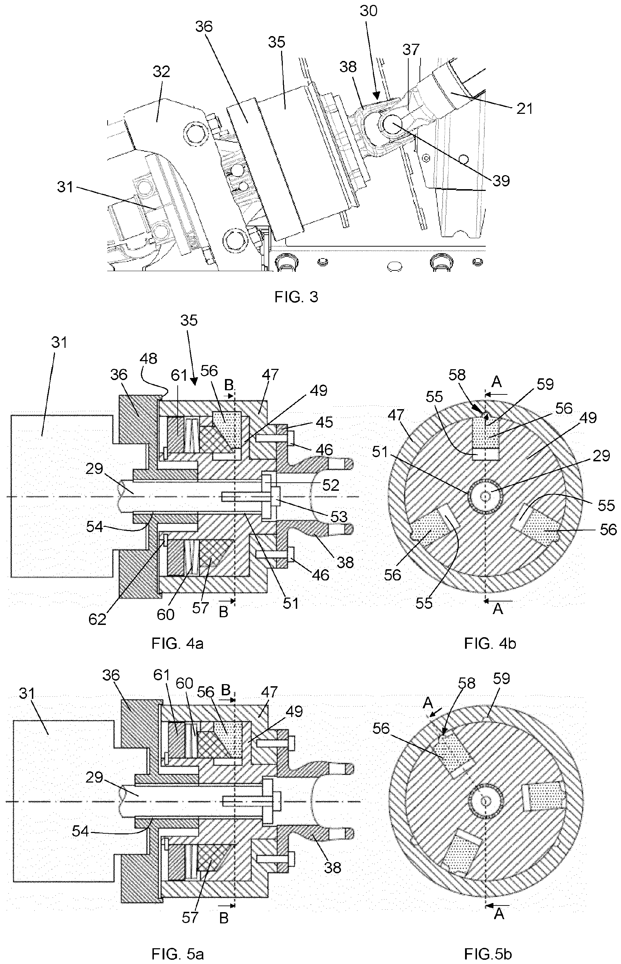

As seen in Figure 2, a torque limiter 35 is mounted between the second universal joint 30 and the planetary gearbox 31. A more detailed view of this portion of the driveline is shown in Figure 3. A flywheel 36 is rotatably connected to the inlet axle (not visible in Figure 3) of the planetary gearbox 31. The flywheel's function is to counteract the vibrations caused by the reciprocating motion actuated by the planetary gearbox 31 and to thereby stabilize the rotation of the rotating components of the driveline, in particular the lateral drive shaft 21. Due to this stabilizing function, the flywheel 36 is an axisymmetric body with respect to its rotation axis.

The second universal joint 30 represented in Figure 2 is a typical and well-known type of joint, including a first fork 37 fixed to the end of the driveshaft 21, a second fork 38 fixed to the housing of the torque limiter 35 and a pivot pin 39 mounted between the two forks. Other known types of universal joints may be used for the second joint 30 as well as for the first joint 22.

Inside the housing, the torque limiter 35 comprises a spring-operated clutch mechanism configured to rotatably couple the second joint 30 (and thereby the driveshaft 21) to the inlet axle of the planetary gearbox 31 below a given torque level, and decouple the second joint 30 from the planetary gearbox 31 when this torque level is exceeded.

It is seen that the torque limiter 35 has a cup-shaped housing with an outer diameter of the same order of magnitude as the diameter of the flywheel 36, and placed directly adjacent the flywheel 36. This is one embodiment of a configuration that enables the torque limiter 35 to contribute to the stabilizing function of the flywheel 36, when the clutch mechanism is engaged, i.e. when the driveshaft 21 is rotatably connected to the inlet axle of the planetary gearbox 31. As a consequence, the flywheel can be reduced in size compared to known configurations. According to other embodiments of the invention, the flywheel is omitted and the torque limiter alone fulfils the stabilizing function.

An example of a suitable torque limiter 35 including its clutch mechanism is illustrated in Figures 4a/4b and 5a/5b, which represent section views along mutually orthogonal planes. These drawings intend to illustrate the functionality of the structure rather than to represent a realistic and detailed technical drawing. Certain details, such as O-rings and clearances required for the passage of lubricants, are not shown. Bolt connections are represented in a simplified manner. The planetary gearbox 31 is not shown in detail in Figures 4a and 5a, apart from its outer contour and its input axle 29.

As seen in Figure 4a, the second fork 38 of the universal joint 30 is integral with a flange 45 that is fixed by bolts 46 to the bottom portion of the cup-shaped housing 47 of the torque limiter. The housing 47 is thereby rotatably connected to the universal joint 30. The cylindrical sidewall of this housing extends away from said bottom portion, in the direction of the flywheel 36, and is coaxial with the rotation axis of the inlet axle 29 of the planetary gearbox 31. In this particular embodiment, the flywheel 36 is provided with an upstanding rim 48 axially oriented in the direction of the torque limiter, and the upper end of the sidewall fits within said rim, without physically touching the rim or in any case without a contact that would severely obstruct the rotation of the flywheel 36 relative to the housing 47. The top surface of the sidewall is also spaced apart by a small distance from the face of the flywheel 36 or in any case mounted so that said relative rotation is not significantly obstructed.

Mounted inside the housing 47, the torque limiter 35 further comprises a central hub 49 that is rotatably connected to the inlet axle 29 of the planetary gearbox 31, via a set of interacting splines 51, and axially via a washer 52 and a bolt connection 53. Alternatively, the central hub 49 can be rotatably connected to the flywheel 36. The flywheel is rotatably connected to the inlet axle 29 by splines 54. Alternatively, the flywheel 36 could form an integral piece with said inlet axle 29. The hub 49 is provided with cylindrical cavities 55, in each of which cavities a driving element 56 is slidably inserted. The driving elements 56 have slanted inner surfaces configured to lie against the conical front surface of a pressure ring 57 arranged around the hub 49. In the radial direction, the driving elements 56 have protrusions 58 configured to fit into matching cavities 59 in the inner surface of the housing's sidewall. The pressure ring 57 is biased against the driving elements 56 by a set of disc springs 60, compressed and held in place between the conical pressure ring 57 and a pressure plate 61. The latter is axially fixed relative to the hub 49 via a retainer ring 62.

In the condition shown in Figures 4a and 4b, the protrusions 58 of the driving elements 56 are engaged in the matching cavities 59 in the inner surface of the housing's sidewall, so that the rotation of the housing 47 is transmitted to the hub 49 and thereby to the inlet axle 29, i.e. all parts of the torque limiter 35 rotate together. When the torque limit is exceeded, for example when a blockage of the knives occurs, the driving elements 56 are forced downward, thereby pushing the pressure ring 57 to the left against the spring force, and thus compressing the springs 60. When the driving elements 56 are pushed downward to a sufficient degree, the clutch mechanism decouples. As soon as the torque decreases below the limit, the clutch mechanism automatically re-engages, as the protrusions 58 are again engaging with the cavities 59 in the sidewall. By choosing a non-axisymmetric position of the driving elements 56 and cavities 59, it can be obtained that the clutch re-engages in only 1 rotational position. This is used to maintain the synchronization between the 2 sets of knives, in case of a header provided with such 2 knife sets.

This clutch mechanism is known as such, and torque limiters based on this principle are available on the market. Torque limiters of this type and provided with a cup-shaped housing of suitable dimensions are therefore usable as such in a driveline according to the invention. One example of a usable product is the Integral Automatic Clutch from Weasler^{®}. However torque limiters which operate with another clutch mechanism may be used as well. In some existing configurations, the flywheel has a cup-shape, with the opening of the cup oriented towards the driveshaft 21. While this setup is advantageous in the absence of a torque limiter, the addition of a torque limiter to this particular configuration may result in a severe limitation of the available extension length when an extendable header floor is used. In the present invention, the torque limiter is contributing to the flywheel effect, so that the flywheel's dimensions can be reduced when the torque limiter is placed in its direct vicinity.

As stated above, the invention also includes drivelines wherein the stabilizing function of the flywheel is performed solely by the torque limiter, i.e. the flywheel is omitted. This requires that the dimensions of the housing of the torque limiter are suitable for performing this function. The cup-shape of the torque limiter housing is advantageous in terms of realizing or contributing to the stabilizing function, but other shapes of said housing are also possible. Preferred shapes include axisymmetric bodies with a diameter that is sufficient to enable the realization of or contribution to the stabilizing function.

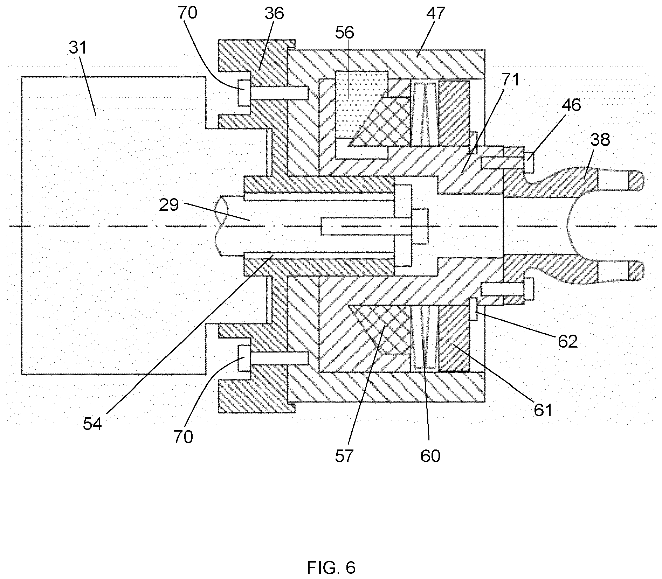

An alternative embodiment is illustrated in Figure 6. Now the cup-shaped housing 47 of the torque limiter is rotatably connected to the flywheel 36 by a set of bolts 70, and the inner hub 71 is rotatably connected to the second fork 38 of the universal joint 30 by similar bolt connections 46 as in the first embodiment. The clutch mechanism is the same as described above, including the driving elements 56, the pressure ring 57, the disc springs 60 and the pressure plate 61 and retainer ring 62. The flywheel 36 is again rotatably connected to the inlet axle 29 of the planetary gearbox 31 by a set of splines 54.

In a header according to the invention, any of the embodiments described above can be present on both sides of header 1, when the header is provided with a double cutterbar, i.e. a set of knives 2 on each side, the two sets combined spanning the complete width of the header 1, each set of knives being actuated by respective drivelines arranged laterally on the two sides of the header. In this case, the inventive aspects described above are applicable to the driveline of each of the knife sets.

According to embodiments of the invention, the outer diameter of the housing 47 is of the same order of magnitude as the diameter of the flywheel, or in the wording of the appended claims, the housing diameter is equal to or close to the flywheel diameter. The housing diameter may be larger or smaller than the flywheel diameter. According to specific embodiments, the difference between the diameters is smaller than 10% or smaller than 5% of the flywheel diameter. These embodiments enable an adequate contribution from the torque limiter to the stabilizing function of the flywheel while maintaining a compact configuration.

Instead of a planetary gearbox 31, the transmission applied for driving the knife movement may be any other suitably known type of transmission, such as for example a wobble box.

A combine harvester of the invention is equipped with a header comprising a single or double driveline in accordance with any of the above-described embodiments or their equivalents. The header is operationally coupled to the harvester, meaning that the transverse drive shaft 15 is coupled to a power shaft of the harvester, so that the driveline is powered by a power source of the harvester.

## Claims

1. An agricultural header (1) comprising two sidewalls (3), a back wall (4), a header floor (6), a set of knives mounted at the front of the header floor, and further comprising a driveline for driving a reciprocating movement of said set of knives, the driveline comprising :
- a transverse drive shaft (15) at the back of the header,
- a bevel gearbox (18) comprising an inlet axle and an outlet axle, the inlet axle being coupled to the transverse drive shaft (15),
- a lateral drive shaft (21) arranged laterally with respect to one of the sidewalls (3), the lateral drive shaft (21) having a first end and a second end,
- a transmission (31) having an inlet axle and an outlet axle, said outlet axle being coupled to the set of knives,
and wherein :
- the lateral drive shaft (21) is coupled at its first end to the outlet axle of the bevel gearbox (18) via a first universal joint (22),
- the lateral drive shaft (21) is coupled at its second end to the inlet axle of the transmission (31) via a second universal joint (30),
**characterised in that** :
- a torque limiter (35) is mounted between the second universal joint (30) and the inlet axle (29) of the transmission (31), the torque limiter comprising a rotatable housing (47) and a rotatable hub (49,71), arranged inside the housing, said hub being coupled to the housing by a releasable clutch mechanism that decouples the housing from the hub above a limit value of the torque applied to the housing relative to the hub or vice versa,
- the housing (47) is dimensioned so that the torque limiter performs the function of stabilizing the rotation of the lateral drive shaft (21) or contributes to said function when the clutch mechanism is engaged.

2. The header according to claim 1, wherein the driveline comprises a flywheel (36) that is rotatably connected to the inlet axle (29) of the transmission (31), the flywheel being configured to contribute to said stabilizing function so that said stabilizing function is realized jointly by the flywheel (36) and by the torque limiter (35) when the clutch mechanism is engaged.

3. The header according to claim 1 or 2, wherein the housing (47) is cup-shaped, having a bottom portion and a cylindrical sidewall oriented essentially parallel to the transmission's inlet axle (29).

4. The header according to claim 3, wherein the driveline comprises a flywheel (36) and wherein
- the housing (47) is arranged directly adjacent to the flywheel (36),
- the housing (47) has an outer diameter that is equal to or close to the diameter of the flywheel (36).

5. The header according to claim 4, wherein the flywheel (36) is provided with a circumferential rim portion (48) that is axially oriented towards the torque limiter (35), and wherein the housing (47) fits within said rim portion (48).

6. The header (1) according to claim 4 or 5, wherein the difference between the outer diameter of the housing (47) and the diameter of the flywheel (36) is smaller than 10% of the flywheel diameter.

7. The header (1) according to any one of the claims 3 to 6, wherein the bottom portion of the housing (47) is rotatably connected to the second universal joint (30) and wherein the hub (49) is rotatably connected to the inlet axle (29) of the transmission (31), and wherein the upper surface of het sidewall is in close proximity to the flywheel (36).

8. The header according to any one of claims 3 to 6, wherein the bottom of the housing (47) is rotatably connected to the flywheel (36) and wherein the hub (71) is rotatably connected to the second universal joint (30).

9. The header according to any one of the preceding claims, wherein the clutch mechanism comprises radial driving elements (56) configured to slide into radial cavities in the hub (49), a set of compressed axial springs (60) and a conical pressure ring (57), configured so that the spring force pushes the driving elements (56), via the pressure ring (57), radially outward so that protrusions (58) on the driving elements (56) are engaged in matching cavities (59) in the inner wall of the housing (47), when the torque is below said limit.

10. The header according to any one of the preceding claims, wherein the sidewalls of the header comprise a front portion (3a) and a back portion (3b), with the floor (6) mounted between the front portions (3a), and wherein said front portions (3a) and said floor (6) are extendable and retractable relative to the back wall (4) of the header and the back portions (3b) of the sidewalls, and wherein the driveshaft (21) is a telescopic driveshaft.

11. The header according to any one of the preceding claims, wherein the inlet axle of the bevel gearbox (18) is coupled to the transverse driveshaft (15) by a chain drive comprising a first sprocket (16) fixed to the transverse drive shaft (15) and a second sprocket (17) rotatably connected to the first universal joint (22), and wherein the second sprocket (17) is located above the first sprocket (16).

12. An agricultural harvester comprising a header (1) according to any one of the preceding claims.

13. A combine harvester comprising a header (1) according to any one of claims 1 to 8.
